# FASCICULE DE BREVET EUROPEEN

(11) **EP 3 526 494 B1**
(45) Date de publication et mention de la délivrance du brevet: **04.11.2020**
(21) Numéro de dépôt: 17784342.2
(22) Date de dépôt: 12.09.2017
(51) Int. Cl.: F16H 61/28, F16H 61/688

(54) **PROCÉDÉ ET DISPOSITIF D'APPRENTISSAGE DE POSITIONS DE SYNCHRONISATION ET DE CRABOTAGE D'ACTIONNEURS D'UNE BOÎTE DE VITESSES DCT D'UN VÉHICULE EN DÉCÉLÉRATION**
VERFAHREN UND VORRICHTUNG ZUM LERNEN VON SYNCHRONISATIONS- UND EINKUPPLUNGSPOSITIONEN EINES DOPPELKUPPLUNGSGETRIEBES (DCT) EINES ABBREMSENDEN FAHRZEUGS
METHOD AND DEVICE FOR LEARNING SYNCHRONISATION AND ENGAGEMENT POSITIONS OF ACTUATORS OF A DUAL-CLUTCH TRANSMISSION (DCT) OF A DECELERATING VEHICLE

(30) Priorité: 17.10.2016 FR 1660006
(43) Date de publication de la demande: 21.08.2019
(73) Titulaire: PSA Automobiles S.A., 78300 Poissy (FR)
(72) Inventeur: SCHAEFFER, Eric, 75013 Paris (FR)
(86) Numéro de dépôt international: PCT/FR2017/052425
(87) Numéro de publication internationale: WO 2018/073502

(56) Documents cités:
- EP-A1- 1 887 258
- DE-A1- 19 953 937
- FR-A1- 2 979 405
- US-A1- 2007 208 480

## Description

L'invention concerne les véhicules comprenant une boîte de vitesses à double embrayage (ou DCT), et plus précisément l'apprentissage de positions d'actionneurs d'une telle boîte de vitesses, tel que connu de FR 2 979 405 A1.

Une boîte de vitesses DCT comprend deux parties (parfois appelées « demies-boîtes de vitesses ») dédiées respectivement aux rapports pairs et aux rapports impairs. Chaque partie de cette boîte de vitesses comprend un arbre primaire couplé à son propre embrayage et destiné à être couplé à au moins un arbre secondaire, et au moins un actionneur propre à agir sur un synchroniseur associé pour synchroniser la vitesse d'un pignon fou avec celle de son arbre récepteur dans une phase de synchronisation, et pour coupler ce pignon fou à son arbre récepteur dans une phase de crabotage.

Un tel agencement permet d'engager simultanément les deux arbres primaires sur des rapports différents, afin de permettre des changements de rapport très rapides et sous couple, c'est-à-dire sans interruption de l'accélération du véhicule. En fait, chaque changement de rapport s'effectue en deux étapes. Dans une première étape, lorsqu'un rapport pair ou impair est engagé dans la boîte de vitesses, le calculateur contrôlant cette dernière anticipe l'engagement du rapport suivant en présélectionnant un rapport impair ou pair. C'est ce que l'on appelle le « passage de la présélection ». Dans une seconde étape, lorsque certaines conditions sont réunies, le calculateur contrôle l'engagement du rapport suivant en provoquant la fermeture de l'embrayage qui est associé au rapport présélectionné et en ouvrant l'autre embrayage associé au rapport en cours d'engagement.

Comme le sait l'homme de l'art, chaque actionneur est associé à un capteur d'effort qui est destiné à mesurer l'effort qu'il exerce sur le synchroniseur associé, et un capteur de position qui est chargé de déterminer à chaque instant sa position en cours par rapport à une position de référence. On peut ainsi piloter les différents synchroniseurs en position, en effort, ou en vitesse, selon la phase de fonctionnement (synchronisation ou crabotage) dans laquelle ils sont impliqués.

Chaque changement de rapport d'une présélection étant effectué dans la partie de la boîte de vitesses qui est temporairement découplée du moteur, il ne doit perturber ni le comportement du véhicule, ni le conducteur par des bruits, des chocs, ou des craquements, étant donné qu'il n'a rien demandé et que le moteur ne connait pas de variation de régime qui permette d'expliquer ces bruits, chocs ou craquements. Par conséquent, on réalise un apprentissage des transitions entre le pilotage en position et le pilotage en effort durant un changement de chaque rapport d'une présélection. Cet apprentissage consiste plus précisément à apprendre les différentes positions de chaque actionneur, pour chaque rapport qui le concerne, pendant les phases de synchronisation et de crabotage.

Dans certaines boîtes de vitesses DCT, la transmission du couple moteur à l'arbre primaire de l'une des deux parties peut, lors d'une phase de décélération du véhicule, induire des déformations des carters qui entraînent un déplacement transversal des arbres primaires, ce qui provoque un déplacement des fourchettes de commutation pilotées par les actionneurs de l'autre partie qui n'est pas embrayée. Il en résulte que le pilotage en position des actionneurs sur la base des positions apprises est faussé, ce qui peut induire un bruit, un choc ou un craquement, voire un blocage.

L'invention a donc notamment pour but d'améliorer la situation.

Elle propose notamment à cet effet un procédé destiné à permettre l'apprentissage de positions d'actionneurs dans une boîte de vitesses à double embrayage d'un véhicule, cette boîte de vitesses comprenant deux parties comportant chacune au moins un actionneur propre à agir sur un synchroniseur associé dans des phases de synchronisation et de crabotage d'un pignon fou.

Ce procédé d'apprentissage se caractérise par le fait qu'il comprend une étape dans laquelle on fournit successivement au moins deux couples ayant des valeurs discrètes différentes à un arbre primaire de l'une des deux parties de la boîte de vitesses et, pour chacun de ces couples :
- on déclenche une phase de synchronisation impliquant un actionneur et un synchroniseur dans l'autre partie de la boîte de vitesses, puis
- on enregistre des première et deuxième positions de cet actionneur à la fin de sous-phases de pilotage respectivement en position et en effort de cette phase de synchronisation, puis
- on déclenche une phase de crabotage de ces actionneur et synchroniseur, puis
- on enregistre une troisième position de cet actionneur à la fin de cette phase de crabotage.

On peut ainsi déterminer facilement et très précisément les positions que doit prendre chaque actionneur d'une boîte de vitesses de type DCT, pour chaque rapport qui le concerne et pour chaque valeur de couple fournie, pendant les phases de synchronisation et de crabotage réalisées lors d'une phase de décélération du véhicule.

Le procédé d'apprentissage selon l'invention peut comporter d'autres caractéristiques qui peuvent être prises séparément ou en combinaison, et notamment :
- dans un premier mode de réalisation, dans son étape on peut fournir successivement deux couples ayant respectivement des première et seconde valeurs discrètes, la seconde valeur discrète étant strictement inférieure à la première valeur discrète ;
- dans un premier mode de réalisation, dans son étape on peut fournir successivement au moins trois couples ayant des valeurs discrètes qui décroissent de façon linéaire, selon une pente négative choisie, à partir d'une première valeur. Par exemple, dans son étape on peut fournir successivement une valeur discrète maximale, trois valeurs discrètes intermédiaires et décroissantes, et une valeur discrète minimale ;
- on peut réitérer son étape pour chaque actionneur de chaque partie de la boîte de vitesses et pour chaque rapport de cette dernière, afin de disposer d'un ensemble de triplets de première, deuxième et troisième positions, associés respectivement aux différents couples fournis, pour chaque actionneur et chaque rapport de la boîte de vitesses.

L'invention propose également un dispositif d'apprentissage destiné à permettre l'apprentissage de positions d'actionneurs dans une boîte de vitesses à double embrayage d'un véhicule, cette boîte de vitesses comprenant deux parties comportant chacune au moins un actionneur propre à agir sur un synchroniseur associé dans des phases de synchronisation et de crabotage d'un pignon fou.

Ce dispositif d'apprentissage se caractérise par le fait qu'il est agencé pour déclencher la fourniture successivement d'au moins deux couples ayant des valeurs discrètes différentes à un arbre primaire de l'une des deux parties de la boîte de vitesses et, pour chacun de ces couples :
- pour déclencher une phase de synchronisation impliquant un actionneur et un synchroniseur dans l'autre partie de la boîte de vitesses, puis
- pour enregistrer des première et deuxième positions de cet actionneur à la fin de sous-phases de pilotage respectivement en position et en effort de cette phase de synchronisation, puis
- pour déclencher une phase de crabotage de ces actionneur et synchroniseur, puis
- pour enregistrer une troisième position de cet actionneur à la fin de cette phase de crabotage.

L'invention propose également un calculateur comprenant un dispositif d'apprentissage du type de celui décrit ci-avant.

L'invention propose également un dispositif de contrôle, destiné à contrôler des positions d'actionneurs de synchroniseurs d'une boîte de vitesses à double embrayage d'un véhicule, et agencé, pendant une phase de décélération du véhicule impliquant une réduction du couple fourni à un arbre primaire de la boîte de vitesses, pour contrôler pendant des phases de synchronisation et de crabotage les positions successives d'un actionneur impliqué dans un changement de rapport en fonction de première, deuxième et troisième positions prédéfinies de cet actionneur, pour ce rapport et pour cette réduction de couple, et faisant partie d'un ensemble stocké et obtenu au moyen d'un procédé d'apprentissage du type de celui présenté ci-avant.

L'invention propose également un véhicule, éventuellement de type automobile, et comprenant une boîte de vitesses à double embrayage et un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un exemple de boîte de vitesses de type DCT couplé à un calculateur équipé d'un dispositif d'apprentissage de positions selon l'invention,
- la figure 2 illustre schématiquement un exemple d'algorithme mettant en oeuvre un procédé d'apprentissage selon l'invention,
- la figure 3 illustre schématiquement au sein de trois diagrammes un premier exemple d'évolution temporelle de la position d'un actionneur pendant des phases de synchronisation et de crabotage, un deuxième exemple d'évolution temporelle de la vitesse d'un arbre primaire pendant ces phases de synchronisation et de crabotage, et un troisième exemple d'évolution temporelle de l'effort exercé par l'actionneur sur le synchroniseur associé pendant ces phases de synchronisation et de crabotage,
- la figure 4 illustre schématiquement au sein d'un diagramme un premier exemple d'évolution temporelle du couple fourni à la boîte de vitesses pendant une phase d'apprentissage au moyen d'un dispositif d'apprentissage selon l'invention, et
- la figure 5 illustre schématiquement au sein d'un diagramme un second exemple d'évolution temporelle du couple fourni à la boîte de vitesses pendant une phase d'apprentissage au moyen d'un dispositif d'apprentissage selon l'invention.

L'invention a notamment pour but de proposer un procédé, et un dispositif DA associé, destinés à permettre l'apprentissage des positions prises par des actionneurs ACj d'une boîte de vitesses BV de type DCT destinée à équiper un véhicule, pendant des phases de synchronisation et de crabotage survenant lors d'une phase de décélération du véhicule.

On considère dans ce qui suit, à titre d'exemple non limitatif, que le véhicule est de type automobile. Il s'agit par exemple d'une voiture. Mais l'invention n'est pas limitée à ce type de véhicule. Elle concerne en effet tout véhicule comprenant une boîte de vitesses de type DCT. Par conséquent, l'invention concerne notamment les véhicules terrestres (voitures, motocyclettes, véhicules utilitaires, cars (ou bus), camions, engins de voirie, engins de chantier, engins de manutention, et trains), et les véhicules maritimes (ou fluviaux).

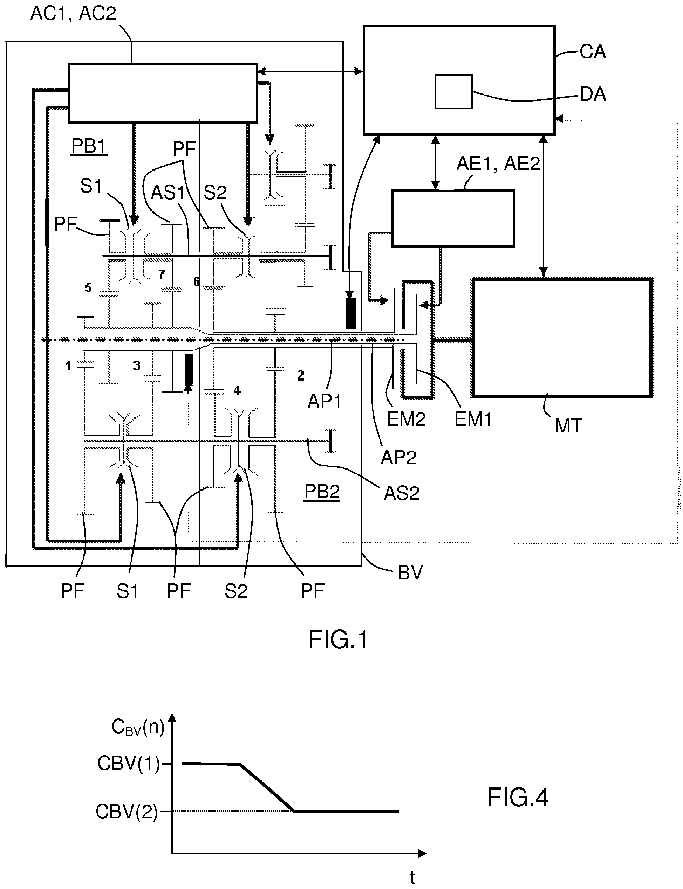

On a schématiquement représenté sur la figure 1 un exemple de boîte de vitesses BV de type DCT, couplé à un calculateur CA comprenant un dispositif d'apprentissage DA selon l'invention et à un moteur thermique MT via un double embrayage EM1, EM2. Par exemple, cette boîte de vitesses BV, ce calculateur CA, ce moteur thermique MT et ce double embrayage EM1, EM2 sont installés sur un banc d'essai dans un laboratoire. Mais ils pourraient être installés dans un véhicule, au moins en partie.

La boîte de vitesses BV étant à double embrayage (ou DCT), elle est subdivisée en deux parties (ou demies-boîtes) PBj (j = 1 ou 2) comprenant chacune un arbre primaire APj couplé à son propre embrayage EMj et destiné à être couplé à au moins un arbre secondaire ASk, et au moins un actionneur ACj propre à agir sur un synchroniseur Sj associé pour synchroniser la vitesse d'un pignon fou PF avec celle de son arbre récepteur dans une phase de synchronisation, et pour coupler ce pignon fou PF à son arbre récepteur dans une phase de crabotage.

On notera que dans l'exemple illustré non limitativement sur la figure 1, la boîte de vitesses BV comprend deux arbres secondaires ASk (k = 1 ou 2) qui font chacun partie des deux parties PBj et donc qui portent chacun au moins un synchroniseur S1 de la première partie PB1 et au moins un synchroniseur S2 de la seconde partie PB2. Chaque synchroniseur Sj est donc ici associé à un arbre secondaire ASk pour synchroniser la vitesse d'un pignon fou PF de ce dernier (ASk (qui constitue son arbre récepteur) avec celle de cet arbre secondaire ASk dans une phase de synchronisation, et pour coupler ce pignon fou PF à son arbre secondaire (récepteur) ASk dans une phase de crabotage. Mais d'autres agencements sont possibles, dès lors que chaque partie (ou demie-boîte de vitesses) PBj comprend un arbre primaire et un ou plusieurs arbres secondaires, avec des synchroniseurs placés soit sur l'arbre primaire, soit sur un arbre secondaire.

Chaque actionneur ACj est agencé de manière à agir sur une fourchette de commutation (non illustrée) qui est elle-même propre à agir sur un synchroniseur Sj. Par ailleurs, chaque actionneur ACj est associé à un capteur de déplacement et un capteur d'effort (non illustrés). Un capteur d'effort est destiné à mesurer l'effort que son actionneur ACj exerce sur le synchroniseur Sj associé. Un capteur de position est chargé de déterminer à chaque instant la position en cours de son actionneur ACj par rapport à une position de référence. Cela permet de piloter les différents synchroniseurs Sj en position, en effort, ou en vitesse, selon la phase de fonctionnement dans laquelle ils sont impliqués.

Les embrayages EM1 et EM2 sont contrôlés par des actionneurs d'embrayage AE1 et EA2.

Comme indiqué précédemment, l'invention propose de mettre en oeuvre un procédé destiné à permettre l'apprentissage des positions prises par des actionneurs ACj de la boîte de vitesses BV pendant des phases de synchronisation et de crabotage survenant lors d'une phase de décélération du véhicule.

Ce procédé peut être mis en œuvre au moyen d'un dispositif d'apprentissage DA selon l'invention.

Dans l'exemple non limitatif illustré sur la figure 1, le dispositif d'apprentissage DA fait partie d'un calculateur CA qui est notamment couplé aux actionneurs ACj et aux différents capteurs (notamment d'effort, de position et de vitesse) de la boîte de vitesses BV, ainsi qu'aux actionneurs d'embrayage AEj. Mais cela n'est pas obligatoire. En effet, ce dispositif d'apprentissage DA pourrait être un équipement couplé à ce calculateur CA, directement ou indirectement, ou bien pourrait comprendre son propre calculateur couplé au calculateur CA, directement ou indirectement. Par conséquent, le dispositif d'apprentissage DA peut être réalisé sous la forme de modules logiciels (ou informatiques ou encore « software »), ou bien d'une combinaison de circuits électroniques (ou « hardware ») et de modules logiciels.

Le procédé, selon l'invention, commence par la fourniture successivement d'au moins deux couples C_{BV}(n) ayant des valeurs discrètes différentes à un arbre primaire APj de l'une des parties PBj de la boîte de vitesses BV. La variable n désigne ici le numéro du couple fourni à l'arbre primaire APj par l'embrayage EMj de la partie PBj, et prend des valeurs comprises entre 1 et N (avec N ≥ 2). Cette fourniture est déclenchée par le dispositif d'apprentissage DA.

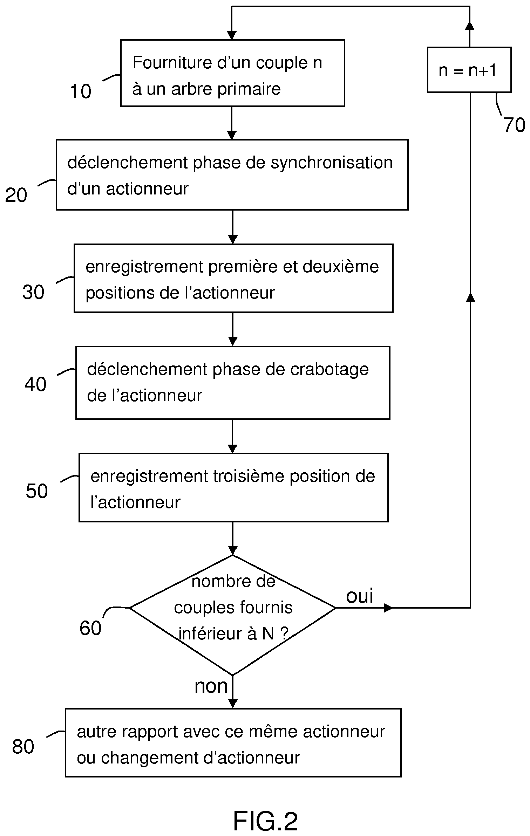

On notera que cette première sous-étape (de fourniture) de l'étape du procédé est référencée 10 dans l'exemple d'algorithme de la figure 2.

Puis, l'étape du procédé se poursuit, pour chaque couple C_{BV}(n), par le déclenchement (par le dispositif d'apprentissage DA) d'une phase de synchronisation impliquant un actionneur ACj' et un synchroniseur Sj' dans l'autre partie PBj' (j' ≠ j) de la boîte de vitesses BV. Cette deuxième sous-étape de l'étape du procédé est référencée 20 dans l'exemple d'algorithme de la figure 2.

Puis, l'étape du procédé se poursuit, pour le couple C_{BV}(n) fourni, par l'enregistrement (par le dispositif d'apprentissage DA) de la première position p1 (n) de cet actionneur ACj' à la fin de la sous-phase de pilotage en position de la phase de synchronisation, puis de la deuxième position p2(n) de cet actionneur ACj' à la fin de la sous-phase de pilotage en effort de la phase de synchronisation. Cette troisième sous-étape de l'étape du procédé est référencée 30 dans l'exemple d'algorithme de la figure 2.

Puis, l'étape du procédé se poursuit pour le couple C_{BV}(n) fourni, par le déclenchement (par le dispositif d'apprentissage DA) d'une phase de crabotage de l'actionneur ACj' et du synchroniseur Sj' associé. Cette quatrième sous-étape de l'étape du procédé est référencée 40 dans l'exemple d'algorithme de la figure 2.

Puis, l'étape du procédé se poursuit, pour le couple C_{BV}(n) fourni, par l'enregistrement (par le dispositif d'apprentissage DA) de la troisième position p3(n) de cet actionneur ACj' à la fin de cette phase de crabotage. Cette cinquième sous-étape de l'étape du procédé est référencée 50 dans l'exemple d'algorithme de la figure 2.

Comme illustré sur la figure 2, une fois que le dispositif d'apprentissage DA dispose des trois positions (p1(n), p2(n), p3(n)) pour le couple C_{BV}(n), il doit réitérer les sous-étapes 10 à 50 avec le couple C_{BV}(n+1) suivant (et dont la valeur est strictement inférieure à celle de C_{BV}(n)), sous réserve que n n'est pas déjà égal à N (le nombre total de couples à fournir successivement).

Afin de vérifier si le nombre de couples déjà fournis est inférieur à N (ou en d'autres termes si n < N), le dispositif d'apprentissage DA peut, comme illustré sur la figure 2, effectuer un test sur la valeur en cours de n dans une sixième sous-étape 60.

Dans l'affirmative (n < N), le dispositif d'apprentissage DA peut, comme illustré sur la figure 2, effectuer une septième sous-étape 70 dans laquelle il incrémente d'une unité la valeur de n (soit n = n+1). Puis, le dispositif d'apprentissage DA peut, comme illustré sur la figure 2, réitérer les étapes 10 à 60 avec une nouvelle valeur de couple C_{BV}(n+1) strictement inférieure à la précédente, et ainsi de suite jusqu'à ce que dans un test 60 la valeur de n soit égale à N. A ce stade, le dispositif d'apprentissage DA dispose de tous les triplets de positions (p1(n), p2(n), p3(n)) de l'actionneur ACj' pour chacun des N couples C_{BV}(1) à C_{BV}(N), et pour le rapport considéré de la boîte de vitesses BV. On notera qu'un même actionneur ACj' peut être associé à un synchroniseur Sj' qui est lui-même associé à deux pignons fous PF voisins et propres à participer à deux rapports distincts.

Dans la négative (n = N), le dispositif d'apprentissage DA peut, par exemple et comme illustré sur la figure 2, effectuer une huitième sous-étape 80 dans laquelle il détermine s'il doit réitérer l'étape du procédé (sous-étapes 10 à 70) avec ce même actionneur ACj' mais pour un autre rapport ou bien avec un autre actionneur ACj" (j" ≠ j'). Ainsi, en réitérant l'étape du procédé pour chaque actionneur ACj de chaque partie PBj de la boîte de vitesses BV et pour chaque rapport de cette dernière (BV), le dispositif d'apprentissage DA peut disposer d'un ensemble de N triplets de première, deuxième et troisième positions (p1(n), p2(n), p3(n)), associés respectivement aux N couples C_{BV}(1) à C_{BV}(N) et donc intégrant les déplacements de la fourchette de commutation en présence de ces derniers (C_{BV}(n)), pour chaque actionneur ACj et chaque rapport de la boîte de vitesses BV.

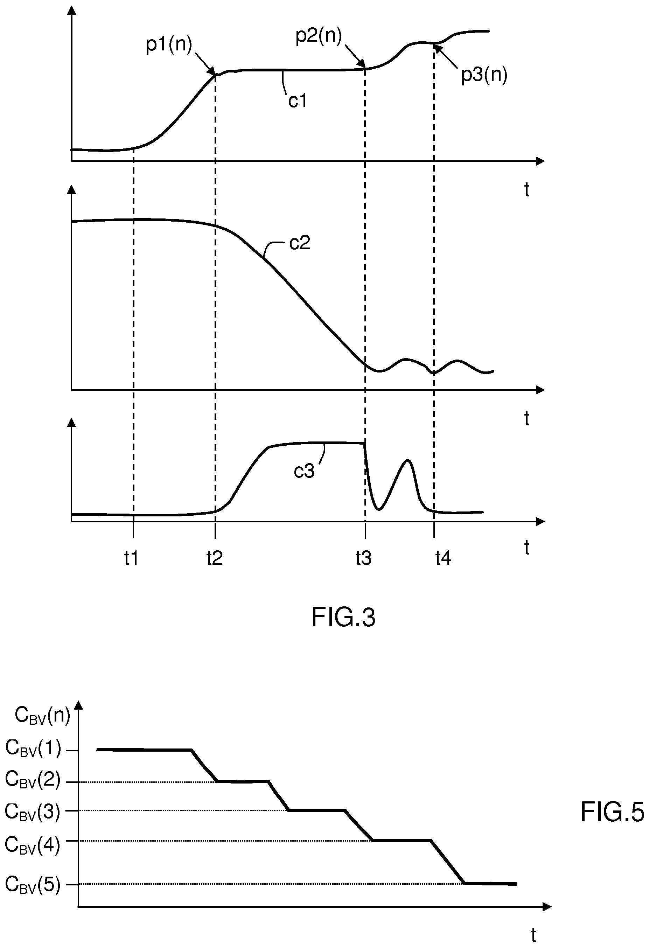

On a schématiquement illustré sur la figure 3, au sein de trois diagrammes, un exemple non limitatif de comportements d'éléments de la boîte de vitesses BV lors de la mise en œuvre du procédé d'apprentissage selon l'invention.

Le premier diagramme (le plus en haut) illustre un premier exemple d'évolution temporelle de la position c1 d'un actionneur ACj' pendant une phase de synchronisation suivie d'une phase de crabotage.

Le deuxième diagramme illustre un deuxième exemple d'évolution temporelle de la vitesse c2 de l'arbre primaire APj qui est impliqué dans ces mêmes phases de synchronisation et de crabotage.

Le troisième diagramme illustre un troisième exemple d'évolution temporelle de l'effort c3 exercé par l'actionneur ACj sur le synchroniseur Sj associé pendant ces mêmes phases de synchronisation et de crabotage.

Comme on peut l'observer sur ces diagrammes, à un instant t1 le dispositif d'apprentissage DA déclenche une phase de synchronisation impliquant un actionneur AC1 associé à un synchroniseur S1 au sein de la première partie PB1 de la boîte de vitesses BV, alors que la seconde partie PB2 de cette dernière (BV) est en train de fournir à l'arbre primaire AP2 un couple C_{BV}(n) produit par le moteur thermique MT. Les consignes de déplacement de l'actionneur AC1 provoquent son déplacement jusqu'à ce qu'il atteigne sa première position p1(n) à la fin de la sous-phase de pilotage en position de la phase de synchronisation à l'instant t2. Le dispositif d'apprentissage DA enregistre alors cette première position p1(n) à l'instant t2.

Puis, entre les instants t2 et t3, le dispositif d'apprentissage DA déclenche la synchronisation de la vitesse (c2) de l'arbre primaire AP1 avec celle d'un pignon fou PF de l'arbre secondaire ASk qui porte le synchroniseur S1 associé à l'actionneur AC1. L'effort (c3) exercé par l'actionneur AC1 sur ce synchroniseur S1 croît alors jusqu'à une valeur maximale. C'est la sous-phase de pilotage en effort de la phase de synchronisation.

A l'instant t3, qui survient à la fin de la sous-phase de pilotage en effort de la phase de synchronisation, le dispositif d'apprentissage DA enregistre la deuxième position p2(n) de l'actionneur AC1. Dans le même temps, le dispositif d'apprentissage DA déclenche une phase de crabotage.

Les consignes de déplacement (c1) provoquent alors un nouveau déplacement (c1) de l'actionneur AC1 jusqu'à un instant t4 où prend fin la phase de synchronisation. Le dispositif d'apprentissage DA enregistre alors la troisième position p3(n) de l'actionneur AC1.

On notera que les valeurs discrètes différentes des couples qui sont fournis successivement à un arbre primaire APj pendant un apprentissage de positions d'un actionneur ACj' peuvent suivre différentes lois.

Ainsi, et comme illustré non limitativement sur la figure 4, dans l'étape du procédé, on peut fournir successivement à l'arbre primaire APj deux couples ayant respectivement des première C_{BV}(1) (n=1) et seconde C_{BV}(2) (n=N=2) valeurs discrètes, la seconde valeur discrète C_{BV}(2) étant strictement inférieure à la première valeur discrète C_{BV}(1).

En variante, on peut fournir successivement à l'arbre primaire APj au moins trois couples ayant des valeurs discrètes C_{BV}(n) qui décroissent de façon linéaire, selon une pente négative choisie, à partir d'une première valeur C_{BV}(1). Cela signifie qu'en présence de trois valeurs discrètes, la première valeur C_{BV}(1) est la plus élevée (ou maximale), la deuxième valeur C_{BV}(2) est intermédiaire et déduite de la première valeur C_{BV}(1) par une régression linéaire ayant la pente négative choisie, et la troisième valeur C_{BV}(3) est minimale et déduite de la deuxième valeur C_{BV}(2) par cette même régression linéaire ayant cette même pente négative choisie.

Par exemple, et comme illustré non limitativement sur la figure 5, dans l'étape du procédé, on peut fournir successivement à l'arbre primaire APj des première C_{BV}(1) (n=1), deuxième C_{BV}(2) (n=2), troisième C_{BV}(3) (n=3), quatrième C_{BV}(4) (n=4), et cinquième C_{BV}(5) (n=N=5) valeurs discrètes de couple. Dans ce cas, la première valeur de couple C_{BV}(1) est la valeur discrète maximale, les deuxième C_{BV}(2), troisième C_{BV}(3) et quatrième C_{BV}(4) valeurs de couple sont respectivement trois valeurs discrètes intermédiaires décroissantes, et la cinquième valeur de couple C_{BV}(5) est la valeur discrète minimale.

Grâce à l'invention, on peut déterminer facilement et très précisément les positions que doit prendre chaque actionneur d'une boîte de vitesses de type DCT, pour chaque rapport qui le concerne et pour chaque valeur de couple fournie, pendant les phases de synchronisation et de crabotage qui sont réalisées lors d'une phase de décélération du véhicule.

Toutes ces positions peuvent ensuite être utilisées au sein d'un véhicule comprenant le même couple (boîte de vitesses BV/moteur thermique MT) que celui ayant servi lors de l'apprentissage, lors de chacune de ses phases de décélération. Pour ce faire, le véhicule peut comprendre un dispositif de contrôle chargé de contrôler les positions des actionneurs ACj des synchroniseurs Sj de sa boîte de vitesses DCT BV.

Ce dispositif de contrôle est agencé, pendant une phase de décélération du véhicule impliquant une réduction du couple fourni à l'un des arbres primaires APj de la boîte de vitesses BV, pour contrôler pendant les phases de synchronisation et de crabotage les positions successives d'un actionneur ACj qui est impliqué dans un changement de rapport en fonction des première, deuxième et troisième positions prédéfinies de cet actionneur ACj, pour ce rapport et pour cette réduction de couple.

Dans ce cas, le dispositif de contrôle stocke dans une mémoire tous les ensembles de N triplets de première, deuxième et troisième positions (p1(n), p2(n), p3(n)), associés respectivement aux N couples C_{BV}(1) à C_{BV}(N), pour chaque actionneur ACj et chaque rapport de la boîte de vitesses BV. On comprendra que l'un de ces couples C_{BV}(n) stocké va toujours correspondre à une réduction de couple qui est en cours et qui est de nature à provoquer une déformation de carters induisant un déplacement de fourchette de commutation.

Ce dispositif de contrôle peut faire partie du calculateur qui est chargé de superviser le fonctionnement du groupe motopropulseur du véhicule, et donc qui est notamment couplé aux actionneurs ACj et aux différents capteurs (notamment d'effort, de position et de vitesse) de la boîte de vitesses BV, ainsi qu'aux actionneurs d'embrayage AEj. Mais cela n'est pas obligatoire. En effet, ce dispositif de contrôle pourrait être un équipement couplé à ce calculateur de supervision, directement ou indirectement, ou bien pourrait comprendre son propre calculateur couplé au calculateur de supervision, directement ou indirectement. Par conséquent, le dispositif de contrôle peut être réalisé sous la forme de modules logiciels (ou informatiques), ou bien d'une combinaison de circuits électroniques et de modules logiciels.

## Revendications

1. Procédé d'apprentissage de positions d'actionneurs (ACj) dans une boîte de vitesses (BV) à double embrayage (EMj) d'un véhicule, ladite boîte de vitesses (BV) comprenant deux parties (PBj) comportant chacune au moins un actionneur (ACj) propre à agir sur un synchroniseur (Sj) associé dans des phases de synchronisation et de crabotage d'un pignon fou (PF), **caractérisé en ce qu'**il comprend une étape (10-80) dans laquelle on fournit successivement au moins deux couples ayant des valeurs discrètes différentes à un arbre primaire (APj) de l'une desdites parties (PBj) et, pour chacun de ces couples, on déclenche une phase de synchronisation impliquant un actionneur (ACj') et un synchroniseur (Sj') dans l'autre partie (PBj'), puis on enregistre des première et deuxième positions dudit actionneur (ACj') à la fin de sous-phases de pilotage respectivement en position et en effort de ladite phase de synchronisation, puis on déclenche une phase de crabotage de ces actionneur (ACj') et synchroniseur (Sj'), puis on enregistre une troisième position dudit actionneur (ACj') à la fin de cette phase de crabotage.

2. Procédé selon la revendication 1, **caractérisé en ce que** dans ladite étape on fournit successivement deux couples ayant respectivement des première et seconde valeurs discrètes, ladite seconde valeur discrète étant strictement inférieure à ladite première valeur discrète.

3. Procédé selon la revendication 1, **caractérisé en ce que** dans ladite étape on fournit successivement au moins trois couples ayant des valeurs discrètes qui décroissent de façon linéaire, selon une pente négative choisie, à partir d'une première valeur.

4. Procédé selon la revendication 3, **caractérisé en ce que** dans ladite étape on fournit successivement une valeur discrète maximale, trois valeurs discrètes intermédiaires et décroissantes, et une valeur discrète minimale.

5. Procédé selon l'une des revendications 1 à 4, **caractérisé en ce que** l'on réitère ladite étape pour chaque actionneur (ACj) de chaque partie (PBj) de la boîte de vitesses (BV) et pour chaque rapport de cette dernière (BV), afin de disposer d'un ensemble de triplets de première, deuxième et troisième positions, associés respectivement aux différents couples fournis, pour chaque actionneur (ACj) et chaque rapport de ladite boîte de vitesses (BV).

6. Dispositif (DA) d'apprentissage de positions d'actionneurs (ACj) dans une boîte de vitesses (BV) à double embrayage (EMj) d'un véhicule, ladite boîte de vitesses (BV) comprenant deux parties (PBj) comportant chacune au moins un actionneur (ACj) propre à agir sur un synchroniseur (Sj) associé dans des phases de synchronisation et de crabotage d'un pignon fou (PF), **caractérisé en ce qu'**il est agencé pour déclencher la fourniture successivement d'au moins deux couples ayant des valeurs discrètes différentes à un arbre primaire (APj) de l'une desdites parties (PBj) et, pour chacun de ces couples, pour déclencher une phase de synchronisation impliquant un actionneur (ACj') et un synchroniseur (Sj') dans l'autre partie (PBj'), puis pour enregistrer des première et deuxième positions dudit actionneur (ACj') à la fin de sous-phases de pilotage respectivement en position et en effort de ladite phase de synchronisation, puis pour déclencher une phase de crabotage de ces actionneur (ACj') et synchroniseur (Sj'), puis pour enregistrer une troisième position dudit actionneur (ACj') à la fin de cette phase de crabotage.

7. Calculateur (CA), **caractérisé en ce qu'**il comprend un dispositif d'apprentissage (DA) selon la revendication 6.

8. Dispositif de contrôle de positions d'actionneurs (ACj) de synchroniseurs (Sj) d'une boîte de vitesses (BV) à double embrayage d'un véhicule, **caractérisé en ce qu'**il est agencé, pendant une phase de décélération dudit véhicule impliquant une réduction du couple fourni à un arbre primaire (APj) de ladite boîte de vitesses (BV), pour contrôler pendant des phases de synchronisation et de crabotage les positions successives d'un actionneur (ACj') impliqué dans un changement de rapport en fonction de première, deuxième et troisième positions prédéfinies de cet actionneur (ACj'), pour ce rapport et pour ladite réduction de couple, et faisant partie d'un ensemble stocké et obtenu au moyen d'un procédé d'apprentissage selon l'une des revendications 1 à 5.

9. Véhicule comprenant une boîte de vitesses (BV) à double embrayage (EMj), **caractérisé en ce qu'**il comprend en outre un dispositif de contrôle selon la revendication 8.

10. Véhicule selon la revendication 9, **caractérisé en ce qu'**il est de type automobile.

## Patentansprüche

1. Verfahren zum Lernen von Aktuatorpositionen (ACj) in einem Getriebe (BV) mit Doppelkupplung (EMj) eines Fahrzeugs, wobei das Getriebe (BV) zwei Teile (PBj) umfasst, die jeweils mindestens einen Aktuator umfassen (ACj), das in der Lage ist, auf einen Synchronisierer (Sj) zu wirken, der in den Phasen der Synchronisation und des Kuppelns eines Zwischenrads (PF) zugeordnet ist, **dadurch gekennzeichnet, dass** es einen Schritt (10-80) umfasst, in dem die Mindestens zwei Paare mit unterschiedlichen diskreten Werten an einer Primärwelle (APj) eines der Teile (PBj) und für jedes dieser Paare wird eine Synchronisationsphase ausgelöst, an der ein Aktuator (ACj') und ein Synchronisierer (Sj) beteiligt sind. Im anderen Teil (PBj') werden dann die erste und die zweite Position des Aktuators (ACj') am Ende der Steuerteilphasen jeweils in Position und in Kraft der Synchronisationsphase aufgezeichnet und dann ausgelöst eine Kopplungsphase dieser Aktuatoren (ACj') und Synchronisiergeräte (Sj'), dann wird am Ende dieser Verbindungsphase eine dritte Position des Aktuators (ACj') aufgezeichnet.

2. Verfahren nach Anspruch 1, **dadurch gekennzeichnet, dass** in dem Schritt zwei Paare nacheinander mit jeweils ersten und zweiten diskreten Werten geliefert werden, wobei der zweite diskrete Wert streng kleiner als der erste diskrete Wert ist.

3. Verfahren nach Anspruch 1, **dadurch gekennzeichnet, dass** in diesem Schritt nacheinander mindestens drei Paare mit diskreten Werten geliefert werden, die gemäß einer gewählten negativen Steigung von einem ersten Wert linear abnehmen.

4. Verfahren nach Anspruch 3, **dadurch gekennzeichnet, dass** in diesem Schritt nacheinander ein maximaler diskreter Wert, drei mittlere und abnehmende diskrete Werte und ein minimaler diskreter Wert geliefert werden.

5. Verfahren nach einem der Ansprüche 1 bis 4, **dadurch gekennzeichnet, dass** der genannte Schritt für jeden Aktuator (ACj) jedes Teils (PBj) des Getriebes (BV) und für jeden Bericht des letzteren (BV) wiederholt wird, um für jeden Aktuator (ACj) und jeden Bericht des Getriebes (BV) einen Satz von Tripletts der ersten, zweiten und dritten Position zu haben, die jeweils den verschiedenen bereitgestellten Drehmomenten zugeordnet sind.

6. Vorrichtung (DA) zum Lernen der Positionen von Aktuatoren (ACj) in einem Getriebe (BV) mit Doppelkupplung (EMj) eines Fahrzeugs, wobei das Getriebe (BV) zwei Teile (PBj) umfasst, die jeweils at umfassen mindestens ein Aktuator (ACj), der zum Einwirken auf einen Synchronisierer (Sj) geeignet ist, der in den Phasen der Synchronisation und des Kuppelns eines Zwischenrads (PF) zugeordnet ist, **dadurch gekennzeichnet, dass** er so angeordnet ist, dass er die sukzessive Versorgung von mindestens auslöst zwei Paare mit unterschiedlichen diskreten Werten an einer Primärwelle (APj) eines der Teile (PBj) und für jedes dieser Paare eine Synchronisationsphase auszulösen, an der ein Aktuator (ACj') und ein Synchronisierer (Sj' beteiligt sind)) im anderen Teil (PBj'), um dann die erste und zweite Position des Aktuators (ACj') am Ende der Pilotierungsunterphasen jeweils in Position und Kraft der Synchronisationsphase aufzuzeichnen, um dann a auszulösen Kupplungsphase dieser Aktuatoren (ACj') und Synchronisation Hroniser (Sj'), um dann am Ende dieser Verbindungsphase eine dritte Position des Aktuators (ACj') aufzuzeichnen.

7. Computer (CA), **dadurch gekennzeichnet, dass** er ein Lerngerät (DA) nach Anspruch 6 umfasst.

8. Vorrichtung zum Steuern der Positionen von Aktuatoren (ACj) von Synchronisierern (Sj) eines Doppelkupplungsgetriebes (BV) eines Fahrzeugs, **dadurch gekennzeichnet, dass** es während einer Verzögerungsphase des betreffenden Fahrzeugs angeordnet ist eine Verringerung des Drehmoments, das einer Primärwelle (APj) des Getriebes (BV) zugeführt wird, um während der Synchronisations- und Kupplungsphasen die aufeinanderfolgenden Positionen eines Aktuators (ACj') zu steuern, der an einer Änderung des Verhältnisses gemäß beteiligt ist der ersten, zweiten und dritten vordefinierten Positionen dieses Aktuators (ACj') für dieses Verhältnis und für die Drehmomentreduzierung und als Teil eines Satzes, der mittels eines Lernverfahrens gemäß einem der folgenden Verfahren gespeichert und erhalten wird Ansprüche 1 bis 5.

9. Fahrzeug mit einem Getriebe (BV) mit Doppelkupplung (EMj), **dadurch gekennzeichnet, dass** es ferner eine Steuervorrichtung nach Anspruch 8 umfasst.

10. Fahrzeug nach Anspruch 9, **dadurch gekennzeichnet, dass** es sich um einen Kraftfahrzeugtyp handelt.

## Claims

1. Method of learning actuator positions (ACj) in a gearbox (BV) with double clutch (EMj) of a vehicle, said gearbox (BV) comprising two parts (PBj) each comprising at least one actuator (ACj) capable of acting on a synchronizer (Sj) associated in the phases of synchronization and clutching of an idler gear (PF), **characterized in that** it comprises a step (10-80) in which the at least two couples having different discrete values at a primary shaft (APj) of one of said parts (PBj) and, for each of these couples, a synchronization phase is triggered involving an actuator (ACj') and a synchronizer (Sj) in the other part (PBj'), then the first and second positions of said actuator (ACj') are recorded at the end of control sub-phases respectively in position and in force of said synchronization phase, then it is triggered a coupling phase of these actuator (ACj') and synchronizer (Sj'), then a third position of said actuator (ACj') is recorded at the end of this interconnection phase.

2. Method according to Claim 1, **characterized in that** in said step two pairs are supplied successively having respectively first and second discrete values, said second discrete value being strictly less than said first discrete value.

3. Method according to Claim 1, **characterized in that** in said step at least three pairs are successively supplied having discrete values which decrease linearly, according to a chosen negative slope, from a first value.

4. Method according to Claim 3, **characterized in that** in said step a maximum discrete value, three intermediate and decreasing discrete values, and a minimum discrete value are successively supplied.

5. Method according to one of claims 1 to 4, **characterized in that** the said step is reiterated for each actuator (ACj) of each part (PBj) of the gearbox (BV) and for each report of the latter (BV), in order to have a set of first, second and third position triplets, associated respectively with the different torques provided, for each actuator (ACj) and each report of said gearbox (BV).

6. Device (DA) for learning the positions of actuators (ACj) in a gearbox (BV) with double clutch (EMj) of a vehicle, said gearbox (BV) comprising two parts (PBj) each comprising at least one actuator (ACj) capable of acting on a synchronizer (Sj) associated in the phases of synchronization and clutching of an idler gear (PF), **characterized in that** it is arranged to trigger the successive supply of at least two couples having different discrete values at a primary shaft (APj) of one of said parts (PBj) and, for each of these couples, to trigger a synchronization phase involving an actuator (ACj') and a synchronizer (Sj') in the other part (PBj'), then to record first and second positions of said actuator (ACj') at the end of piloting sub-phases, respectively in position and in force of said synchronization phase, then to trigger a clutching phase of these actuators (ACj') and synchronizer (Sj'), then to record a third position of said actuator (ACj') at the end of this interconnection phase.

7. Computer (CA), **characterized in that** it comprises a learning device (DA) according to claim 6.

8. Device for controlling the positions of actuators (ACj) of synchronizers (Sj) of a double-clutch gearbox (BV) of a vehicle, **characterized in that** it is arranged, during a deceleration phase of said vehicle involving a reduction in the torque supplied to a primary shaft (APj) of said gearbox (BV), in order to control, during synchronization and clutching phases, the successive positions of an actuator (ACj') involved in a change of ratio according to of first, second and third predefined positions of this actuator (ACj'), for this ratio and for said torque reduction, and forming part of a set stored and obtained by means of a learning method according to one of the claims 1 to 5.

9. Vehicle comprising a gearbox (BV) with double clutch (EMj), **characterized in that** it further comprises a control device according to claim 8.

10. Vehicle according to Claim 9, **characterized in that** it is of the automobile type.
